# EUROPÄISCHE PATENTSCHRIFT

(11) **EP 2 776 796 B1**
(45) Veröffentlichungstag und Bekanntmachung des Hinweises auf die Patenterteilung: **26.07.2017**
(21) Anmeldenummer: 12769925.4
(22) Anmeldetag: 21.09.2012
(51) Int. Cl.: G01G 23/01, G01G 21/26

(54) **TRÄGEREINHEIT FÜR EINE GEWICHTSSCHALTUNGSVORRICHTUNG UND WÄGEZELLE**
CARRIER UNIT FOR A WEIGHT SWITCHING DEVICE AND WEIGHING CELL
ENSEMBLE SUPPORT POUR UN DISPOSITIF DE COMMUTATION DE POIDS ET CELLULE DE PESÉE

(30) Priorität: 09.11.2011 DE 102011055160
(43) Veröffentlichungstag der Anmeldung: 17.09.2014
(73) Patentinhaber: Sartorius Lab Instruments GmbH & Co. KG, 37079 Göttingen (DE)
(72) Erfinder: MÜHLICH, Sigo, 37120 Bovenden (DE); BAJOHR, Ulrich, 370124 Rosdorf (DE); FEHLING, Thomas, 37218 Witzenhausen (DE)
(86) Internationale Anmeldenummer: PCT/EP2012/003954
(87) Internationale Veröffentlichungsnummer: WO 2013/068062

(56) Entgegenhaltungen:
- DE-A1- 2 841 996
- US-A- 4 566 548

## Beschreibung

Die Erfindung bezieht sich auf eine Trägereinheit für eine Gewichtsschaltungsvorrichtung einer elektronischen Wägezelle, umfassend einen relativ zu einer Basis vertikal bewegbaren, ersten Schaltgewichtträger zur vertikal spielbehafteten Lagerung einer ersten Schaltgewichtsanordnung, der zwei voneinander beabstandete, parallele und mittels eines Brückenstücks verbundene Trägerarme aufweist.

Die Erfindung bezieht sich weiter auf eine elektronische Wägezelle, umfassend
- eine Gerätebasis,
- einen auf der Gerätebasis angeordneten elektronischen Wägesensor,
- einen mit dem Wägesensor mechanisch gekoppelten Lastaufnehmer, der eine Lastschalenhalterung sowie eine Schaltgewichtsaufnahme trägt, und
- eine Gewichtsschaltungsvorrichtung, umfassend eine Trägereinheit mit Schaltgewichten und eine Hubeinheit, zur bedarfsweisen Be- und Entlastung der Schaltgewichtsaufnahme mit den Schaltgewichten.

Derartige Trägereinheiten sind aus der JP 62027626 A und derartige Wägezellen aus der DE 33 30 988 C2 bekannt.

Unter einer Gewichtsschaltung wird im vorliegenden Zusammenhang allgemein eine Vorrichtung zur bedarfsweisen Be- und Entlastung eines Lastaufnehmers einer Wägezelle verstanden. Insbesondere sind Substitutionsschaltungen und Justierschaltungen bekannt. Bei letzteren unterscheidet man häufig zwischen Kalibrierschaltungen und Linearisierungsschaltungen. Von besonderem Interesse sind automatisierte Gewichtsschaltungen, wie sie insbesondere in elektronischen Wägezellen zum Einsatz kommen, in denen der Lastaufnehmer, z.B. ein Kragarm, die Verbindung zwischen einer Lastschale, die das zu messende Gewicht stützt, und einem elektrischen Wägesensor darstellt.

Substitutionsschaltungen dienen in der Regel der Erweiterung des Messbereichs. So stellen elektrische Wägesensoren, insbesondere solche, die nach dem Prinzip der elektromagnetischen Kraftkompensation arbeiten, meist nur einen kleinen, jedoch sehr genau digitalisierbaren Messstrombereich zur Verfügung. Da der Mess- bzw. Kompensationsstrom in direktem Zusammenhang mit der den Wägesensor belastenden Gewichtskraft steht, führt dies zu einem entsprechend kleinen Gewichtsmessbereich. Um auch kleine, unterhalb des so vorgegebenen Gewichtsmessbereichs liegende Gewichte messen zu können, ist es bekannt, diese durch zusätzliche Beaufschlagung des Wägesensors mit bekannten Substitutionsgewichten in den zulässigen Gewichtsmessbereich zu "verschieben".

Bei den Justierschaltungen werden im Gegensatz dazu bekannte Justiergewichte alleine gemessen, um Instrumentenparameter zu ermitteln und/oder einzustellen. Von Kalibrierung spricht man dabei meist bei der Bestimmung der Geräteparameter unter Volllast; von Linearisierung spricht man häufig, wenn zur Bestimmung einer insbesondere linearen Kennlinie Geräteparamater bei mehreren Lastniveaus ermittelt und für weitere Lastniveaus interpoliert oder extrapoliert werden.

Aus der oben genannte DE 33 30 988 C2 ist eine elektronische Wägezelle bekannt, deren Lastaufnehmer eine Lastschale mit einem nach dem Prinzip der elektromagnetischen Kraftkompensation arbeitenden Wägesensor verbindet. Unter der Lastschale ist an dem Lastaufnehmer eine Schaltgewichtsaufnahme zur bedarfsweisen Aufnahme von Schaltgewichten geordnet. Die Schaltgewichte sind Teil einer nicht in direktem Kontakt mit dem Lastaufnehmer stehenden Gewichtsschaltungsvorrichtung, welche aus einer Trägereinheit und einer zugeordneten Hubeinheit besteht. Die mit vertikalem Spiel in der Trägereinheit gelagerten Schaltgewichte können durch eine von der Hubeinheit hervorgerufenen, vertikalen Bewegung einzelnen oder gemeinsam auf die Schaltgewichtsaufnahme abgelegt oder von dieser abgehoben werden, um so unterschiedliche Substitutions- oder Justierzustände zu erzeugen. Nachteilig dabei sind im Fall der Substitution die asymmetrische Belastung des Lastaufnehmers, die zu Verkantungen und daher zu Messfehlern (Ecklastfehler) führen kann, und im Fall der Justierung die geringe Anzahl an unterschiedlichen, einstellbaren Justierzuständen.

Aus der oben genannten JP 62027626 A ist eine Trägereinheit einer Gewichtsschaltungsvorrichtung bekannt, bei der ein gabelförmiger Schaltgewichtträger an seinen den freien Enden der Trägerarme abgewandten Seite schwenkbeweglich an einer motorbetriebenen Schwenkwelle gelagert ist. Auf den freien Enden der Trägerarme liegt ein ringförmiges Kalibriergewicht so auf, dass sein Ringzentrum mit dem Zentrum des Lastschalenzapfens einer Wägezelle korrespondiert. Durch Verschwenkung der Trägereinheit kann das ringförmige Kalibriergewicht konzentrisch zum Lastschalenzapfen auf den diesen tragenden Lastaufnehmer aufgelegt und von ihm abgehoben werden. Grundsätzlich würde sich das ringförmige Kalibriergewicht auch als Substitutionsgewicht eignen. Nachteilig ist jedoch die geringe Anzahl realisierbarer Substitutions- bzw. Justierzustände.

Aus der DE 87 15 016 U1 ist eine Wägezelle bekannt, bei der die Justiergewichte in Normalstellung auf einer unter der Lastschale angeordneten Schaltgewichtsablage aufliegen und bei Bedarf durch zwei von horizontal schwenkbaren Hebeln im Zwischenraum zwischen Geräteboden und Schaltgewichten verschiebbare Keile angehoben und gegen einen oberen Anschlag gepresst werden. Nachteilig ist auch hier die geringe Anzahl der erzeugbaren Justier- und Substitutionszustände sowie ihren Asymmetrien.

Aus der DE 28 41 996 C2 ist eine Wägezelle mit einer Vielzahl paarweise symmetrisch angeordneter Substitutionsgewichte bekannt. Die Substitutionsgewichte hängen an Nocken mehrerer übereinander angeordneter Nockenwellen und sind paarweise gemeinsam oder einzeln auf übereinander angeordnete Schaltgewichtsaufnahmen absenkbar und von diesen abhebbar. Nachteilig hierbei ist der erhebliche Bauraumbedarf der Gewichtsschaltungsvorrichtung.

Schließlich ist aus der DE 10 2005 033 952 B4 eine monolithische Gewichtsschaltungsvorrichtung bekannt, deren funktionale Einzelheiten in der Druckschrift jedoch nicht offenbart sind.

Es ist die Aufgabe der vorliegenden Erfindung, eine gattungsgemäße Trägereinheit sowie eine gattungsgemäße elektronische Wägezelle derart weiterzubilden, dass eine Mehrzahl von Substitutions- und Justierzuständen bei minimiertem Bauraumbedarf realisierbar sind.

Diese Aufgabe wird in Verbindung mit den Merkmalen des Oberbegriffs von Anspruch 1 dadurch gelöst, dass ein zweiter Schaltgewichtträger zur vertikal spielbehafteten Lagerung einer zweiten Schaltgewichtsanordnung, der ebenfalls zwei voneinander beabstandete, parallele und mittels eines Brückenstücks verbundene Trägerarme aufweist, ebenfalls relativ zu der Basis vertikal bewegbar angeordnet ist, wobei die Trägerarme des ersten Schaltgewichtträgers zwischen und parallel zu den Trägerarmen des zweiten Schaltgewichtträgers angeordnet sind und wobei jeder Schaltgewichtträger mittels zweier außerhalb beider Trägerarme, parallel zu diesen und diese zwischen sich einschließend angeordneter und an ihren freien Enden mit ihm verbundener Parallellenker an einer gemeinsamen Quertraverse angelenkt ist.

Die Aufgabe wird weiter in Verbindung mit den Merkmalen des Oberbegriffs von Anspruch 15 dadurch gelöst, dass die Trägereinheit als eine über ihre Quertraverse starr mit der Gerätebasis verbundene Trägereinheit der oben genannten Art, unter deren Trägerarmen jeweils parallel zu diesen ein walzenförmiges Schaltgewicht hängend gelagert ist, ausgebildet und über der Schaltgewichtsaufnahme angeordnet ist und dass die Hubeinheit zur selektiven, vertikalen Bewegung der Schaltgewichtträger eingerichtet ist.

Bevorzugte Ausführungsformen der Erfindung sind Gegenstand der abhängigen Ansprüche.

Zunächst sieht die Erfindung vor, die Trägereinheit mit einem zweiten, grundsätzlich gleich gestalteten Schaltgewichtträger auszustatten. Dies ist der Intention geschuldet, die Anzahl verfügbarer Schaltgewichte zu erhöhen, um mehr Justier- und/oder Substitutionszustände realisieren zu können. Die Erfindung geht jedoch in zwei Punkten über diesen grundsätzlich aus dem Stand der Technik bekannten Ansatz hinaus, um den für die doppelten Schaltgewichtträger erforderlichen Bauraum zu minimieren. Gemäß dem ersten weitergehenden Aspekt der Erfindung ist eine Verschachtelung der Schaltgewichtträger ineinander vorgesehen. Der zweite Schaltgewichtträger umgreift mit seinem Trägerarmpaar den ersten Schaltgewichtträger. Zur Erzielung einer ausgeglichenen Belastung des Lastaufnehmers ist ohnehin ein gewisser Abstand zwischen den Trägerarmen jedes Schaltgewichtträgers erforderlich. Der Trägerarmabstand des zweiten Schaltgewichtträgers muss nur geringfügig über das zwingend erforderliche Maß hinaus vergrößert werden, um im Zwischenraum zwischen den Trägerarmen Platz für den ersten Schaltgewichtträger zu schaffen. Ein zweiter weiterführender Aspekt der vorliegenden Erfindung liegt darin, die Vertikalbewegung jedes Schaltgewichtträgers zu optimieren.

Anders als im gattungsbildenden Stand der Technik ist bei der Erfindung keine Schwenk-, sondern eine reine Vertikalbewegung realisiert. Die reine Vertikalbewegung erlaubt einen insgesamt geringeren Hub als eine Schwenkbewegung, deren Mindesthub von dem am schwenkachsennahen Ende des Trägers erforderlichen Abstand zwischen Schaltgewicht und Schaltgewichtsauflage bestimmt wird, wobei der Abstand am schwenkachsenfernen Ende stets überdimensioniert ist. Die rein vertikale Bewegung hingegen verringert den vertikalen Bauraum. Die rein vertikale Bewegung wird durch die Anordnung je eines Paares von Parallellenkern für jeden Schaltgewichtträger erreicht. Die Parallellenker, die, wie dem Fachmann grundsätzlich bekannt, zwei parallele und mit Federgelenken verbundene Lenkerhebel umfassen, sind parallel zu den Trägerarmen und außerhalb der beiden ineinander verschachtelten Schaltgewichtträger angeordnet. Mit anderen Worten wird die verschachtelte Kombination der beiden Schaltgewichtträger seitlich von je zwei Parallellenkern eingerahmt, von denen je einer mit je einem Trägerarm im Bereich dessen quertraversenfernen Ende verbunden ist. Die quertraversennahen Enden der Parallellenker sind an der Quertraverse angelenkt, die quertraversennahen Enden der Trägerarme stehen in keinem direkten Kontakt mit der Quertraverse.

Im eingebauten Zustand innerhalb einer elektronischen Wägezelle tragen die Schaltgewichtträger unterhalb und parallel zu ihren Trägerarmen hängend gelagerte Schaltgewichte, wie sie aus dem Stand der Technik grundsätzlich bekannt sind. Die so ausgestattete Trägereinheit ist mit ihrer Quertraverse an der Gehäusebasis festgelegt, steht somit nicht in direktem Kontakt mit den lastabhängig beweglichen Teilen des Gesamtsystems, wie insbesondere der Lastschale und dem Lastaufnehmer. Allerdings ist die Trägereinheit mit den Schaltgewichten so positioniert, dass die Schaltgewichte im abgehobenen Zustand unmittelbar über der vorzugsweise unter der Lastschale angeordneten Schaltgewichtsaufnahme schweben. Ein Absenken des einen und/oder anderen Schaltgewichtträgers legt die hängenden Schaltgewichte in die Schaltgewichtsaufnahme ab, so dass der Lastaufnehmer bedarfsgerecht mit den zusätzlichen Gewichten belastet wird. Das Anheben und Absenken der Schaltgewichtträger erfolgt mittels einer Hubeinheit, die geeignet eingerichtet ist, bedarfsgerecht den ersten, den zweiten oder beide Schaltgewichtträger anzuheben bzw. abzusenken.

Durch die Erfindung wird bei nahezu gleichem Bauraum die Anzahl der Justier- und/oder Substitutionszustände deutlich erhöht, ohne dass neue, unerwünschte Ecklastfehler auftreten müssten. Insbesondere wird es möglich, eine Wägezelle zu schaffen, welche dem Benutzer die Möglichkeit der Justierung, d.h. der Kalibrierung und der Linearisierung und zugleich die Möglichkeit der Substitutionswägung eröffnet.

Bei einer bevorzugten Ausführungsform der Erfindung ist vorgesehen, dass die Trägerarme jedes Schaltgewichtträgers zueinander sowie zu den Trägerarmen des jeweils anderen Schaltgewichtträgers höhengleich angeordnet sind. Die Trägerarme liegen somit im gemeinsam angehobenen und im gemeinsam abgesenkten Zustand in einer gemeinsamen Ebene. Lediglich in unterschiedlichen Hubzuständen liegen die Trägerarme der beiden Schaltgewichtträger in versetzten, parallelen Ebenen. Diese Anordnung garantiert einen minimalen Bauraumbedarf in vertikaler Richtung.

Bei einer Weiterbildung der Erfindung ist für die Parallellenker hingegen vorgesehen, dass die Parallellenker jedes einzelnen Schaltgewichtträgers höhenversetzt zueinander angeordnet sind. Mit anderen Worten ist jeder Schaltgewichtträger an einem tieferliegenden Parallellenker sowie einem höherliegendem Parallellenker befestigt. Die Parallellenker jedes Schaltgewichtträgers sind insbesondere etwa entlang dessen Diagonale voneinander beabstandet. Diese Maßnahme erhöht die Vertikalausdehnung nur scheinbar. Durch die Höhenversetzung der Parallellenker wird nämlich das tragende Lenkerparallelogramm höher und damit steifer. Wollte man dieselbe Steifigkeit mit höhengleich angeordneten Parallellenkern erreichen, müssten deren Lenkerhebel jeweils vertikal weiter voneinander beabstandet sein, sodass die genannte weiterführend erfinderische Maßnahme im Ergebnis zu einer Materialeinsparung ohne vertikalen Bauraumnachteil führt.

Bei einer Weiterbildung dieses Aspektes ist vorgesehen, dass die jeweils auf einer Seite der Schaltgewichtträger angeordneten Parallellenker höhenversetzt zueinander, insbesondere senkrecht übereinander angeordnet sind. Dies führt zu einer Verringerung des horizontalen Bauraumbedarfs im Vergleich zu Varianten, bei denen die Parallellenker, wie die Trägerarme, seitlich nebeneinander angeordnet sind.

Um zu einer weiteren Einsparung vertikalen Bauraums zu gelangen, ist bei einer noch weitergehenden Fortführung des vorgenannten Aspektes vorgesehen, dass die Parallellenker des ersten und des zweiten Schaltgewichtträgers paarweise höhengleich angeordnet sind. Anders ausgedrückt sind die Parallellenker der beiden Schaltgewichtträger diagonal miteinander verschränkt. So liegt auf einer Seite der Trägereinheit der Parallellenker des ersten Schaltgewichtträgers über dem Parallellenker des zweiten Schaltgewichtträgers, wohingegen auf der anderen Seite der Trägereinheit der Parallellenker des zweiten Schaltgewichtträgers über demjenigen des ersten Schaltgewichtträgers liegt, wobei die jeweils oben liegenden Parallellenker höhengleich und die jeweils unten liegenden Parallellenker ebenfalls höhengleich angeordnet sind. Durch diese spiegelsymmetrische Höhenversetzung der Parallellenker der beiden Schaltgewichtträger wird der vertikale Bauraum optimal genutzt, was in einem minimalen vertikalen Bauraumbedarf bei hoher Steifigkeit resultiert.

Bevorzugt sind die Quertraverse, der erste und der zweite Schaltgewichtträger und die jeweils zugeordneten Parallellenker gemeinsam einstückig ausgebildet. Hierdurch wird eine Dejustage im Laufe der Zeit vermieden. Insbesondere ist bevorzugt, dass die Quertraverse, der erste und der zweite Schaltgewichtträger und die jeweils zugeordneten Parallellenker gemeinsam monolithisch ausgebildet, d.h. aus einem Materialblock herausgearbeitet, insbesondere herausgefräst sind. Die in der Wägetechnik grundsätzlich bekannte monolithische Bauweise von Hebelsystemen hat auch im Rahmen der vorliegenden Erfindung den Vorteil optimaler Reproduzierbarkeit und Parameterbeständigkeit der Vorrichtung.

Günstigerweise weist jeder Schaltgewichtträger quertraversenseitig einen Stützvorsprung auf. Diese Stützvorsprünge, die zur Bauraumoptimierung bevorzugt zueinander benachbart in eine vertikal offene Ausnehmung der Quertraverse hineinragen, dienen als Ansatzpunkt für eine Hubeinheit einer die erfindungsgemäße Trägereinheit enthaltenden Wägezelle.

Als Hubeinheit kommt insbesondere eine motorisch angetriebene Nockenwelle infrage, auf deren Nocken sich die Stützvorsprünge der Schaltgewichtträger abstützen. Je nach Stellung der exzentrischen Nocken, die hier auch als Kulissenscheiben bezeichnet werden, können unterschiedliche Hubzustände der Schaltgewichtträger realisiert sein. Um eine sehr direkte Führung zu ermöglichen, können die Stützvorsprünge durch eine Vorspannkraft, beispielsweise eine Federkraft elastisch gegen die Nocken vorgespannt sein. Alternative Ausführungsformen der Hubeinheit, beispielsweise mittels pneumatischer oder hydraulischer Kolben, mittels piezoelektrischer Motoren oder auf andere Weise, sind ebenso einsetzbar.

Wie bereits weiter oben erwähnt, ist bevorzugt vorgesehen, dass unter jedem Trägerarm parallel zu diesem ein walzenförmiges Schaltgewicht hängend gelagert ist. Besonders bevorzugt ist dabei vorgesehen, dass jedes Schaltgewicht einen Walzenkörper mit beidseitig angeformten, axialen Lagerzapfen aufweist, die in axial ausgerichteten, seitlich angeschrägten Führungsnuten liegen, welche in Deckelbleche eingeformt sind, mit denen Lagerkammern, die endständig und an ihren Unterseiten sowie ihren einander zugewandten Stirnseiten offen in den zugeordneten Trägerarm eingeformt und um mehr als die Walzenkörperlänge sowie um weniger als die Gesamtlänge des jeweiligen Schaltgewichtes voneinander beabstandet sind, nach unten verschlossen sind. Für die hängende Lagerung der Schaltgewichte, die das vertikale Spiel gestatten muss, welches erforderlich ist, um die Schaltgewichte im auf die Schaltgewichtablage abgelegten Zustand mechanisch von der Trägereinheit zu entkoppelten, ist eine hinterschnittene Struktur erforderlich, die insbesondere bei monolithischer Bauweise schwer erzielbar ist. Es ist daher vorgesehen, dass die Schaltgewichte mit ihren Lagerzapfen in Lagerkammern der Trägerarme hineinragen, welche groß genug sind, um genügendes Spiel (sowohl vertikal als auch horizontal) zu ermöglichen. Diese Kammern, die zwangsläufig auf ihren einander gegenüberliegenden Stirnseiten, welche von den Lagerzapfen der Schaltgewichte durchragt werden, offen sind, sind zusätzlich nach unten offen, um die Schaltgewichte von unten einschieben zu können. Ein axiales Einschieben ist nicht möglich, da der Abstand der Lagerkammern voneinander hierzu zu gering ist. So lassen sich die Schaltgewichte, deren Walzenkörper zu groß ist um in die Lagerkammer eindringen zu können, axial nicht weit genug in eine Richtung verschieben, als dass der Lagerzapfen auf der anderen Seite aus der Lagerkammer freikäme. Die offenen Unterseiten der Lagerkammer müssen jedoch zur hängenden Lagerung der Schaltgewichte verschlossen werden. Hierzu dienen die beispielsweise angeschraubten Deckelbleche, welche eine axiale, selbstzentrierende Führungsnut aufweisen, die den jeweiligen Lagerzapfen in reproduzierbarer Weise aufnimmt. So ist trotz der Erhaltung des notwendigen Spiels für die Ablage der Schaltgewichte eine exakt definierte, reproduzierbare Position der Schaltgewichte im hängenden Zustand gewährleistet.

Die genaue Anzahl realisierbarer Justier- und/oder Substitutionszustände hängt zum einen von der Anzahl der Hubzustände der einzelnen Schaltgewichtträger und zum anderen von der Gestaltung der mechanischen Relativverhältnisse von Schaltgewichtlagerung und Schaltgewichtsaufnahme ab. Um eine möglichst hohe Modularität zu erreichen, ist bevorzugt vorgesehen, dass Schaltgewichte jedes einzelnen Schaltgewichtträgers zueinander höhengleich gelagert sind, wobei weiter bevorzugt die Schaltgewichte des ersten Schaltgewichtträgers höhenversetzt zu den Schaltgewichten des zweiten Schaltgewichtträgers gelagert sind. Damit bietet die Trägereinheit eine universelle Ausgangskonfiguration, die von unterschiedlichen Wägezellen durch die spezielle Gestaltung der dortigen Schaltgewichtsaufnahmen zur Realisierung der jeweils benötigten Gewichtsschaltungszustände genutzt werden kann.

Insbesondere ist bei einer bevorzugten Ausführungsform einer elektronischen Wägezelle vorgesehen, dass die Schaltgewichtsaufnahme und die Lagerung der Schaltgewichte so aufeinander höhenabgestimmt sind, dass die Schaltgewichte des einen Schaltgewichtträgers bei dessen gleichmäßiger Absenkung die Schaltgewichtsaufnahme zeitversetzt und die Schaltgewichte des anderen Schaltgewichtträgers bei dessen gleichmäßiger Absenkung die Schaltgewichtsaufnahme zeitgleich belasten. Die zeitgleiche Auflage zweier Schaltgewichte, insbesondere symmetrisch zum Lasteinleitungspunkt des Lastaufnehmers unterhalb der Lastschale ist besonders zur Gewichtsschaltung im Rahmen von Substitutionsmessungen, wo Ecklastfehler nach Möglichkeit zu vermeiden sind, geeignet. Bei der Gewichtsschaltung im Rahmen einer Justierung, insbesondere Kalibrierung oder Linearisierung, ist die Unabhängigkeit der Belastung mit unterschiedlichen Gewichten von größerer Bedeutung als der Ecklastfehler, der bei den stets gleichen Justiergewichten durch geeignete Justierroutinen herausgerechnet werden kann. Insofern werden die bei gleichmäßigem Absenken der zugeordneten Schaltgewichtträgers zeitversetzt abgelegten Schaltgewichte bevorzugt als Justiergewichte verwendet.

Entsprechend ist bei einer Weiterbildung der erfindungsgemäßen elektronischen Wägezelle vorgesehen, dass weiter eine mit der Hubeinheit wirkverbundene Steuerung vorgesehen ist, welche eingerichtet ist, die die Schaltgewichtsauflage bei gleichmäßigem Absenken des zugeordneten Schaltgewichtträgers zeitgleich belastenden Schaltgewichte im Rahmen einer Substitutionswägeroutine als Substitutionsgewichte zu verwenden und die die Schaltgewichtsauflage bei gleichmäßigem Absenken des zugeordneten Schaltgewichtträgers zeitversetzt belastenden Schaltgewichte im Rahmen einer Kalibrier- und/oder Linearisierungs-Routine als Kalibrier- bzw. Linearisierungsgewichte zu verwenden.

Weitere Merkmale und Vorteile der Erfindung ergeben sich aus der nachfolgenden, speziellen Beschreibung und den Zeichnungen.

Es zeigen:
- Figur 1:: perspektivische Darstellung einer erfindungsgemäßen Trägereinheit mit Schaltgewichten;
- Figur 2:: perspektivische Darstellung der Trägereinheit von Figur 1 in Montagestellung mit Hubeinheit und Lastaufnehmer einer Wägezelle;
- Figur 3:: perspektivische Bodenansicht des Gegenstandes von Figur 1;
- Figur 4:: perspektivische Bodenansicht des Gegenstandes von Figur 2;
- Figur 5:: Prinzipskizze unterschiedlicher Gewichtsschaltzustände einer erfindungsgemäßen Wägezelle.

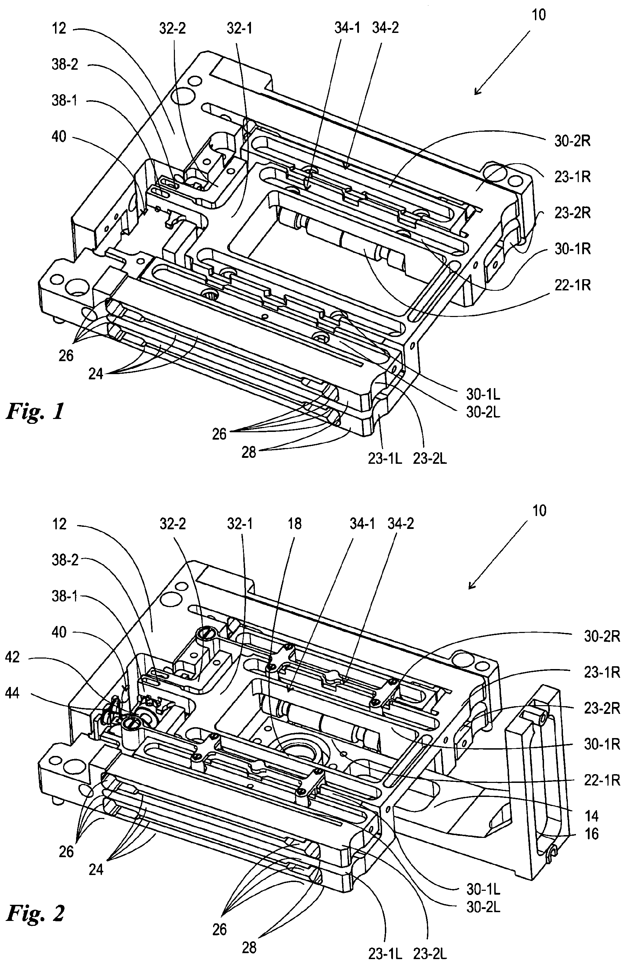

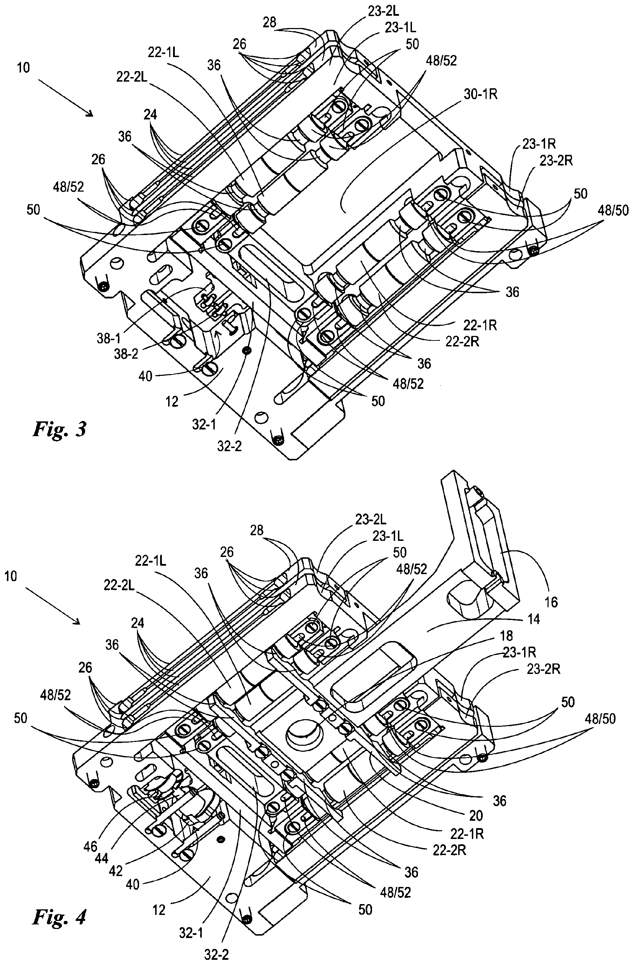

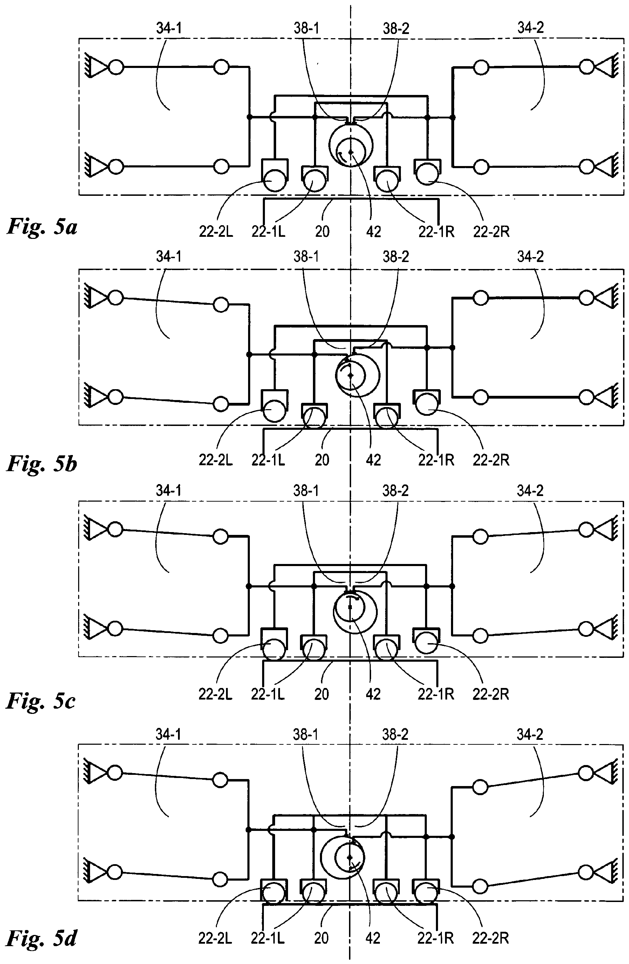

Die Figuren 1 bis 4 stellen jeweils dieselbe bevorzugte Ausführungsform der erfindungsgemäßen Trägereinheit 10 in unterschiedlichen Ansichten allein (Figuren 1 und 3) bzw. im Montagezustand (Figuren 2 und 4) dar. Figur 5 zeigt unterschiedliche Gewichtsschaltungszustände, die mit der Trägereinheit 10 der Figuren 1 bis 4 realisierbar sind. Gleiche Bezugszeichen in den Figuren weisen auf gleiche oder analoge Bauteile hin. Manche Bezugszeichen sind in der Form N-x oder N-xR bzw. N-xL angegeben, wo N ein an anderer Stelle auch isoliert verwendetes Bezugszeichen ist, x "1" oder "2" lauten kann und die Zugehörigkeit zum ersten oder zweiten Schaltgewichtsträger ausdrückt und "L" und "R" ein Hinweis auf "rechts" bzw. "links" unter Bezugnahme auf Figur 1 ist. Bei der isolierten Verwendung eines Bezugszeichens N spielen Zuordnung und Ausrichtung keine Rolle. Die Figuren 1 bis 4 sollen nachfolgend gemeinsam, Figur 5 im Anschluss diskutiert werden.

Das feste Bezugselement der Trägereinheit 10 ist die Quertraverse 12. Mit dieser wird die Trägereinheit 10 in einer Wägezelle an deren Gerätebasis festgelegt. Die Montage erfolgt dabei so, wie in den Figuren 2 und 4 gezeigt, nämlich unmittelbar über dem Ausleger 14 eines als Kragarm ausgebildeten Lastaufnehmers 16. Der Lastaufnehmer 16 ist über ein nicht dargestelltes Lenker- und Übersetzungssystem mit einem ebenfalls nicht dargestellten Wägesensor verbunden. Andererseits ist der Lastaufnehmer 16 mit einer ebenfalls nicht dargestellten Lastschale verbunden, die auf einem nicht dargestellten Lastzapfen ruht, welcher in einer Aufnahme 18 des Auslegers 14 befestigt ist und die Trägereinheit 10 vertikal durchragt. Wie insbesondere in Figur 4 erkennbar, ist der Ausleger 14 fest mit einer Schaltgewichtsaufnahme 20 verbunden, so dass spielbehaftet am Schaltgewichtträger gelagerte Schaltgewichte 22-1R, 22-1L, 22-2R und 22-2L über den Lastaufnehmer 16 den Wägesensor zusätzlich zu dem Gewicht auf der Lastschale belasten können, wenn sie auf der Schaltgewichtsaufnahme 20 abgelegt werden. Dieses Konzept ist im Stand der Technik bekannt; es ist die übliche Aufgabe solcher Trägereinheiten, im Zusammenspiel mit einer Hubeinheit eine selektive Be- bzw. Entlastung der Schaltgewichtsaufnahme 20 mit den Schaltgewichten 22 zu ermöglichen.

Senkrecht zur Quertraverse gehen horizontal vier Parallellenker 23-1R, 23-1L, 23-2R und 23-2L ab. Jeder Parallellenker besteht aus zwei parallelen Lenkerhebeln 24, die über Federgelenke 26 einerseits an der Quertraverse 12 und andererseits an einem die Lenkerhebel 24 verbindenden Kopfstück 28 angelenkt sind. Das aus dem Stand der Technik bekannte Parallellenkerprinzip erlaubt eine reine Vertikalbewegung eines mit dem Kopfstück 28 verbundenen Elementes bei geringer Verschwenkung des Parallellenkers 23.

Jedes Kopfstück 28 ist mit dem Ende eines von vier Trägerarmen 30-1R, 30-1L, 30-2R bzw. 30-2L verbunden. Die Trägerarme 30 erstrecken sich parallel zu den Parallellenkern 23 in Richtung auf die Quertraverse 12. An ihren quertraversenseitigen Enden sind sie jeweils mit einem Brückenstück 32-1, 32-2 paarweise miteinander verbunden, nämlich der Trägerarm 30-1R über das Brückenstück 32-1 mit dem Trägerarm 30-1L und der Trägerarm 30-2R über das Brückenstück 32-2 mit dem Trägerarm 30-2L. Je zwei Trägerarme 30-1R/30-1L, 30-2R/30-2L bilden somit zusammen mit je einem Brückenstück 32-1, 32-2 einen Schaltgewichtträger 34-1, 34-2, der mit einem Satz Parallellenker 23-1, 23-2 an der Quertraverse 12 angelenkt ist.

Die beiden Schaltgewichtträger 34 sind höhengleich und ineinander verschachtelt angeordnet. Insbesondere ist der erste Schaltgewichtträger 34-1 im Inneren des zweiten Schaltgewichtträgers 34-2 angeordnet. Anders die zugehörigen Parallellenker 23. Die den ersten Schaltgewichtträger 34-1 tragenden Parallellenker 23-1R und 23-1L sind höhenversetzt zueinander angeordnet. Ebenso die den zweiten Schaltgewichtträger 34-2 tragenden Parallellenker 23-2R und 22-2L. Insbesondere ist in den Figuren deutlich zu erkennen, dass die jeweils einerseits der Schaltgewichtträger 34 angeordneten Parallellenker 23 direkt über einander angeordnet sind. Mit anderen Worten sind die Parallellenker 23 der beiden Schaltgewichtträger 34 diagonal miteinander verschränkt.

Unter jedem Trägerarm 30 ist ein Schaltgewicht 22 hängend gelagert. Die Schaltgewichte 22 weisen einen im Wesentlichen walzenförmigen Körper mit zwei nahe ihren Enden befindlichen Einstichen 36 auf. Die Einstiche 36 korrespondieren mit entsprechenden Mulden der Schaltgewichtsaufnahme 20, so dass die Schaltgewichte 22 im Wesentlichen ohne axiales Spiel in die Schaltgewichtsaufnahme 20 abgelegt werden können. Bei der dargestellten Ausführungsform hängen die Schaltgewichte 22 höhengleich unter den Trägerarmen 30. Um bei einem Absenken insbesondere des zweiten, äußeren Schaltgewichtträgers 34-2 eine zeitversetzte Belastung der Schaltgewichtsaufnahme 20 zu erreichen, sind die den entsprechenden Schaltgewichten 22-2R und 22-2L zugeordneten Mulden der Schaltgewichtsaufnahme 20 unterschiedlich tief ausgebildet. In Figur 5, auf die weiter unten näher eingegangen werden soll, sind die unterschiedlichen, realisierbaren Gewichtsschaltungszustände in einer Prinzipskizze dargestellt. Die Aufhängung der Schaltgewichte 22 erfolgt über Lagerzapfen 48, die sich beidseitig axial aus den Stirnseiten der Walzenkörper der Schaltgewichte 22 erheben. Mit diesen Lagerzapfen 48 werden die Schaltgewichte von unten in offene Taschen der Trägerarme 30 eingelegt und die Taschen mit aufgeschraubten Deckelblechen 50 verschlossen. Die Deckelbleche 50 weisen jeweils eine Führungsnut 52 auf, in der die Lagerzapfen 48 selbstzentriert ruhen. Die Lagerkammern haben eine ausreichende Höhe, um ein Vertikalspiel der Schaltgewichte 22 zu erlauben, so dass diese nach Ablage auf der Schaltgewichtsaufnahme 20 kräftefrei vom jeweiligen Schaltgewichtträger 34 entkoppelt sind.

Zur Betätigung der Schaltgewichtträger 34 ist im montierten Gesamtsystem eine Hubeinheit vorgesehen, wie insbesondere in den Figuren 2 und 4 erkennbar. Mit den Brückenstücken 32 verbunden ist jeweils ein Stützvorsprung 38-1, 38-2, der sich in eine vertikaloffene Ausnehmung 40 der Quertraverse 12 hinein erstreckt. Diese Stützvorsprünge 38 ruhen auf zwei Kulissenscheiben 42, welche drehfest auf einer Nockenwelle 44, die mit der Ausgangswelle eines Elektromotors verbunden ist, gelagert sind. Eine Rotation der Nockenwelle 44 hebt und senkt die Stützvorsprünge 38 entsprechend der Form der Kulissenscheiben 42. Hierdurch heben und senken sich die gesamten Schaltgewichtträger 34 und mit ihnen die Schaltgewichte 22. Das bevorzugte Schaltschema ist in der weiter unten näher erläuterten Figur 5 als Prinzipskizze dargestellt. Eine ebenfalls drehfest mit der Nockenwelle 44 verbundene Schlitzscheibe 46 dient als optischer Positionsgeber, mit der die aktuelle Nockenwellenposition an eine zentrale Steuereinheit übermittelt wird.

Figur 5 zeigt in vier Teilfiguren die vier Gewichtsschaltzustände, die mit der bevorzugten Ausführungsform der vorliegenden Erfindung realisierbar sind. Die beiden Schaltgewichte 22-1R und 22-1L, die von dem ersten, inneren Schaltgewichtträger 34-1 getragen sind, sind höhengleich aufgehängt und ihre zugeordneten Mulden in der Schaltgewichtsaufnahme 20 sind gleich tief gestaltet. Somit werden sie bei Absenken bzw. Anheben des ersten Schaltgewichtträgers 34-1 stets zeitgleich abgelegt bzw. angehoben. Der erste Schaltgewichtträger 34-1 dient bevorzugt der Substitution; die Schaltgewichte 22-1R und 22-1L sind somit bevorzugt Substitutionsgewichte. Im Gegensatz dazu dienen die Schaltgewichte 22-2R und 22-2L des zweiten Schaltgewichtträgers 34-2 vorzugsweise als Justiergewichte, insbesondere als Kalibrier- und/oder Linearisierungsgewichte. Bei ihnen sind die Gewichtsaufhängung und die spezielle Gestaltung der Schaltgewichtsaufnahme 20 so aufeinander abgestimmt, dass sie bei einem Absenken bzw. Anheben des zweiten Schaltgewichtträgers 34-2 zeitversetzt abgelegt bzw. angehoben werden. Entsprechend sieht die Kulissenscheibe für den zweiten Schaltgewichtträger 34-2 drei unterschiedliche Stellungen vor, die in den Figuren 5a/5b, 5c/5d illustriert sind. Man beachte, dass bei der Darstellung der Figur 5 die Schaltgewichtsaufnahme 20 eine einheitliche Höhe aufweist, so dass der erläuterte Zeitversatz durch eine höhenversetzte Aufhängung der Schaltgewichte 22-2R und 22-2L erzielt wird. Bei der Ausführungsformen der Figuren 1 bis 4 sind hingegen, wie insbesondere aus Figur 4 ersichtlich, die Schaltgewichte 22-2R und 22-2L höhengleich angeordnet, wohingegen die entsprechenden Mulden der Schaltgewichtsaufnahme 20 unterschiedliche Tiefen aufweisen. Beide Varianten sind funktional äquivalent; auch Mischvarianten sind denkbar.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann der Fachmann die spezielle Geometrie und Dimensionierung der einzelnen Elemente an die Erfordernisse des jeweiligen Einzelfalls anpassen. Selbstverständlich ist es auch denkbar, das erfindungsmäße Prinzip um einen oder mehrere Schaltgewichtträger, Schaltgewichte oder Gewichtschaltungszustände zu erweitern.

### Bezugszeichenliste

- 10: Trägereinheit
- 12: Quertraverse
- 14: Ausleger
- 16: Lastaufnehmer
- 18: Aufnahme
- 20: Schaltgewichtsaufnahme
- 22-1R: Schaltgewicht
- 22-1L: Schaltgewicht
- 22-2R: Schaltgewicht
- 22-2L: Schaltgewicht
- 23-1R: Parallellenker
- 23-1L: Parallellenker
- 23-2R: Parallellenker
- 23-2L: Parallellenker
- 24: Lenkerhebel
- 26: Federgelenk
- 28: Kopfstück
- 30-1R: Trägerarm
- 30-1L: Trägerarm
- 30-2R: Trägerarm
- 30-2L: Trägerarm
- 32-1: Brückenstück
- 32-2: Brückenstück
- 34-1: erster Schaltgewichtträger
- 34-2: zweiter Schaltgewichtträger
- 36: Einstich
- 38-1: Stützvorsprung
- 38-2: Stützvorsprung
- 40: vertikale Ausnehmung in 12
- 42: Kulissenscheibe
- 44: Nockenwelle
- 46: Positionsgeber
- 48: Lagerzapfen
- 50: Deckelblech
- 52: Führungsnut

## Patentansprüche

1. Trägereinheit für eine Gewichtsschaltungsvorrichtung einer elektronischen Wägezelle, umfassend einen relativ zu einer Basis vertikal bewegbaren, ersten Schaltgewichtträger (34-1) zur vertikal spielbehafteten Lagerung einer ersten Schaltgewichtsanordnung (22-1R, 22-1L), der zwei voneinander beabstandete, parallele und mittels eines Brückenstücks (32-1) verbundene Trägerarme (30-1R, 30-1L) aufweist,
**dadurch gekennzeichnet,**
**dass** ein zweiter Schaltgewichtträger (34-2R, 34-2L) zur vertikal spielbehafteten Lagerung einer zweiten Schaltgewichtsanordnung (22-2R, 22-2L), der ebenfalls zwei voneinander beabstandete, parallele und mittels eines Brückenstücks (32-2) verbundene Trägerarme (30-2R, 30-2L) aufweist, ebenfalls relativ zu der Basis vertikal bewegbar angeordnet ist,
wobei die Trägerarme (30-1R, 30-1L) des ersten Schaltgewichtträgers (34-1) zwischen und parallel zu den Trägerarmen (30-2R, 30-2L) des zweiten Schaltgewichtträgers (34-2)angeordnet sind und
wobei jeder Schaltgewichtträger (34-1; 34-2)mittels zweier außerhalb beider Trägerarmpaare (30-1R, 30-1L; 30-2R, 30-2L), parallel zu diesen und diese zwischen sich einschließend angeordneter und an ihren freien Enden mit ihm verbundener Parallellenker (23-1R, 23-1L; 23-2R, 23-2L) an einer gemeinsamen Quertraverse (12) angelenkt ist.

2. Trägereinheit nach Anspruch 1,
dass die Trägerarme (30-1R, 30-1L; 30-2R, 30-2L) jedes Schaltgewichtträgers (34-1; 34-2) zueinander sowie zu den Trägerarmen (30-1R, 30-1L; 30-2R, 30-2L) des jeweils anderen Schaltgewichtträgers (34-1; 34-2) höhengleich angeordnet sind.

3. Trägereinheit nach einem der vorangehenden Ansprüche,
**dadurch gekennzeichnet,**
**dass** die Parallellenker (23-1R, 23-1L; 23-2R, 23-2L) jedes einzelnen Schaltgewichtträgers (34-1; 34-2) höhenversetzt zueinander angeordnet sind.

4. Trägereinheit nach Anspruch 3,
**dadurch gekennzeichnet,**
**dass** die jeweils auf einer Seite der Schaltgewichtträger (34-1; 34-2) angeordneten Parallellenker (23-1R, 23-1L; 23-2R, 23-2L) höhenversetzt zueinander angeordnet sind.

5. Trägereinheit nach Anspruch 4,
**dadurch gekennzeichnet,**
**dass** die jeweils auf einer Seite der Schaltgewichtträger (34-1; 34-2) angeordneten Parallellenker (23-1R, 23-1L; 23-2R, 23-2L) senkrecht übereinander angeordnet sind.

6. Trägereinheit nach einem der Ansprüche 4 bis 5,
**dadurch gekennzeichnet,**
**dass** die Parallellenker (23-1R, 23-1L; 23-2R, 23-2L) des ersten und des zweiten Schaltgewichtträgers (34-1; 34-2) paarweise höhengleich angeordnet sind.

7. Trägereinheit nach einem der vorangehenden Ansprüche,
**dadurch gekennzeichnet,**
**dass** die Quertraverse (12), der erste und der zweite Schaltgewichtträger (34-1; 34-2) und die jeweils zugeordneten Parallellenker (23-1R, 23-1L; 23-2R, 23-2L) gemeinsam einstückig ausgebildet sind.

8. Trägereinheit nach Anspruch 7,
**dadurch gekennzeichnet,**
**dass** die Quertraverse (12), der erste und der zweite Schaltgewichtträger (34-1; 34-2) und die jeweils zugeordneten Parallellenker (23-1R, 23-1L; 23-2R, 23-2L) gemeinsam monolithisch ausgebildet sind.

9. Trägereinheit nach einem der vorangehenden Ansprüche,
**dadurch gekennzeichnet,**
**dass** jeder Schaltgewichtträger (34-1; 34-2) quertraversenseitig einen Stützvorsprung (38-1; 38-2) aufweist.

10. Trägereinheit nach Anspruch 9,
**dadurch gekennzeichnet,**
**dass** die Stützvorsprünge (38-1; 38-2) zueinander benachbart in eine vertikal offene Ausnehmung (40) der Quertraverse (12) hineinragen.

11. Trägereinheit nach einem der vorangehenden Ansprüche,
**dadurch gekennzeichnet,**
**dass** unter jedem Trägerarm (30-1R, 30-1L; 30-2R, 30-2L) parallel zu diesem ein walzenförmiges Schaltgewicht (22-1R, 22-1L; 22-2R, 22-2L) hängend gelagert ist.

12. Trägereinheit nach Anspruch 11,
**dadurch gekennzeichnet,**
**dass** jedes Schaltgewicht (22-1R, 22-1L; 22-2R, 22-2L) einen Walzenkörper mit beidseitig angeformten, axialen Lagerzapfen (48) aufweist, die in axial ausgerichteten, seitlich angeschrägten Führungsnuten (52) liegen, welche in Deckelbleche (50) eingeformt sind, mit denen Lagerkammern, die endständig und an ihren Unterseiten sowie ihren einander zugewandten Stirnseiten offen in den zugeordneten Trägerarm (30-1R, 30-1L; 30-2R, 30-2L) eingeformt und um mehr als die Walzenkörperlänge sowie um weniger als die Gesamtlänge des jeweiligen Schaltgewichtes (22-1R, 22-1L; 22-2R, 22-2L) voneinander beabstandet sind, nach unten verschlossen sind.

13. Trägereinheit nach einem der Ansprüche 11 bis 12,
**dadurch gekennzeichnet,**
**dass** die Schaltgewichte (22-1R, 22-1L; 22-2R, 22-2L) jedes einzelnen Schaltgewichtträgers (34-1; 34-2) zueinander höhengleich gelagert sind.

14. Trägereinheit nach einem der Ansprüche 11 bis 13,
**dadurch gekennzeichnet,**
**dass** die Schaltgewichte (22-1R, 22-1L) des ersten Schaltgewichtträgers (34-1) höhenversetzt zu den Schaltgewichten (22-2R, 22-2L) des zweiten Schaltgewichtträgers (34-2) gelagert sind.

15. Elektronische Wägezelle, umfassend
- eine Gerätebasis,
- einen auf der Gerätebasis angeordneten elektronischen Wägesensor,
- einen mit dem Wägesensor mechanisch gekoppelten Lastaufnehmer (16), der eine Lastschalenhalterung sowie eine Schaltgewichtsaufnahme (20) trägt, und
- eine Gewichtsschaltungsvorrichtung, umfassend eine Trägereinheit (10) mit Schaltgewichten (22-1R, 22-1L; 22-2R, 22-2L) und eine Hubeinheit (42, 44, 46), zur bedarfsweisen Be- und Entlastung der Schaltgewichtsaufnahme (20) mit den Schaltgewichten (22-1R, 22-1L; 22-2R, 22-2L),
**dadurch gekennzeichnet,**
**dass** die Trägereinheit (10) als eine über ihre Quertraverse (12) starr mit der Gerätebasis verbundene Trägereinheit (10) nach einem der Ansprüche 11 bis 14 ausgebildet und über der Schaltgewichtsaufnahme (20) angeordnet ist und
**dass** die Hubeinheit (42, 44, 46) zur selektiven, vertikalen Bewegung der Schaltgewichtträger (34-1; 34-2) eingerichtet ist.

16. Elektronische Wägezelle nach Anspruch 15, soweit rückbezogen auf einen der Ansprüche 9 bis 10,
**dadurch gekennzeichnet,**
**dass** die Hubeinheit (42, 44, 46) eine motorisch angetriebene Nockenwelle (44) aufweist, auf deren Kulissenscheibe (42) sich die Stützvorsprünge (38-1; 38-2) der Schaltgewichtträger (34-1; 34-2) abstützen.

17. Elektronische Wägezelle nach einem der Ansprüche 15 bis 16,
**dadurch gekennzeichnet,**
**dass** die Schaltgewichtsaufnahme (20) und die Lagerung der Schaltgewichte (22-1R, 22-1L; 22-2R, 22-2L) so aufeinander höhenabgestimmt sind, dass die Schaltgewichte (22-2R, 22-2L) des einen Schaltgewichtträgers (34-2) bei dessen gleichmäßiger Absenkung die Schaltgewichtsaufnahme (20) zeitversetzt und die Schaltgewichte (22-1R, 22-1L) des anderen Schaltgewichtträgers (34-1) bei dessen gleichmäßiger Absenkung die Schaltgewichtsaufnahme (20) zeitgleich belasten.

18. Elektronische Wägezelle nach Anspruch 17,
**dadurch gekennzeichnet,**
**dass** weiter eine mit der Hubeinheit (42, 44, 46) wirkverbundene Steuerung umfasst ist, welche eingerichtet ist, die die Schaltgewichtsauflage (20) bei gleichmäßigem Absenken des zugeordneten Schaltgewichtträgers (34-1) zeitgleich belastenden Schaltgewichte (22-1R, 22-1L) im Rahmen einer Substitutionswägeroutine als Substitutionsgewichte zu verwenden und
die die Schaltgewichtsauflage (20) bei gleichmäßigem Absenken des zugeordneten Schaltgewichtträgers (34-2) zeitversetzt belastenden Schaltgewichte (22-2R, 22-2L) im Rahmen einer Kalibrier- und/oder Linearisierungs-Routine als Kalibrier- bzw. Linearisierungsgewichte zu verwenden.

## Claims

1. Support unit for a weight switching device of an electronic weighing cell, comprising
a first switching weight carrier (34-1), which is vertically movable relative to a base, for the vertical mounting with play of a first switching weight arrangement (22-1 R, 22-1 L) comprising two mutually spaced-apart and parallel carrier arms (30-1 R, 30-1 L) connected by means of a bridge member (32-1),
**characterised in that**
a second switching weight carrier (34-2R, 34-2L) for the vertical mounting with play of a second switching weight arrangement (22-2R, 22-2L) similarly comprising two mutually spaced-apart and parallel carrier arms (30-2R, 30-2L) connected by means of a bridge member (32-2) is similarly arranged to be vertically movable relative to the base,
wherein the carrier arms (30-1 R, 30-1 L) of the first switching weight carrier (34-1) are arranged between and parallel to the carriers arms (30-2R, 30-2L of the second switching weight carrier (34-2) and
wherein each switching weight carrier (34-1, 34-2) is articulated to a common cross member (12) by means of two parallel guides (23-1 R, 23-1 L; 23-2R, 23-2L) which are arranged outside and parallel to the two carrier arm pairs (30-1 R, 30-1 L; 30-2R, 30-2L) and include these therebetween and which are connected at their free ends with the carrier.

2. Support unit according to claim 1, **characterised in that** the carrier arms (30-1 R, 30-1L; 30-2R, 30-2L) of each switching weight carrier (34-1; 34-2) are arranged at the same height relative to one another as well as to the carrier arms (30-1 R, 30-1 L; 30-2R, 30-2L) of the respective other switching weight carrier (34-1; 34-2).

3. Support unit according to one of the preceding claims, **characterised in that** the parallel guides (23-1, 23-1 L; 23-2R, 23-2L) of each individual switching weight carrier (34-1, 34-2) are arranged to be offset in height relative to one another.

4. Support unit according to claim 3, **characterised in that** the parallel guides (23-1 R, 23-1 L; 23-2R, 23-2L) respectively arranged on one side of the switching weight carriers (34-1; 34-2) are arranged to be offset in height relative to one another.

5. Support unit according to claim 4, **characterised in that** the parallel guides (23-1 R, 23-1 L; 23-2R, 23-2L) respectively arranged on one side of the switching weight carriers (34-1; 34-2) are arranged vertically one above the other.

6. Support unit according to one of claims 4 and 5, **characterised in that** the parallel guides (23-1 R, 23-IL; 23-2R, 23-2L) of the first and second switching weight carriers (34-1; 34-2) are arranged in pairs at the same height.

7. Support unit according to any one of the preceding claims, **characterised in that** the cross member (12), the first and second switching weight carriers (34-1 34-2) and the respectively associated parallel guides (23-1 R, 23-1 L; 23-2R, 23-2L) are constructed in common integrally.

8. Support unit according to claim 7, **characterised in that** the cross member (12), the first and second switching weight carriers (34-1 34-2) and the respectively associated parallel guides (23-1 R, 23-1 L; 23-2R, 23-2L) are constructed in common monolithically.

9. Support unit according to any one of the preceding claims, **characterised in that** each switching weight carrier (34-1; 34-2) has a support projection (38-1; 38-2) at the cross member side.

10. Support unit according to claim 9, **characterised in that** the support projections (38-1; 38-2) project adjacently to one another into a vertical open recess (40) of the cross member (12).

11. Support unit according to any one of the preceding claims, **characterised in that** a roller-shaped switching weight (22-1 R, 22-1 L; 22-2R, 22-2L) is suspension-mounted under each carrier arm (30-1 R, 30-2R; 30-2R, 30-2L) and parallel thereto.

12. Support unit according to claim 11, **characterised in that** each switching weight (22-1 R, 22-1 L; 22-2R, 22-2L) comprises a roller body with axial bearing pins (48), which are formed at both ends and lie in axially aligned and laterally chamfered guide grooves (52) formed in cover plates (50) downwardly closing storage chambers which are formed in the associated carrier arm (30-1 R, 30-2R; 30-2R, 30-2L) to be open at the end and at the lower sides thereof as well as their mutually facing ends and which are spaced from one another by more than the roller body length and by less than the overall length of the respective switching weight (22-1 R, 22-1 L; 22-2R, 22-2L).

13. Support unit according to one of claims 11 and 12, **characterised in that** the switching weights (22-1 R, 22-1 L; 22-2R, 22-2L) of each individual switching weight carrier (34-1; 34-2) are mounted to be at the same height relative to one another.

14. Support unit according to any one of claims 11 to 13, **characterised in that** the switching weights (22-1 R, 22-1 L) of the first switching weight carrier (34-1) are mounted to be offset in height with respect to the switching weights (22-2R, 22-2L) of the second switching weight carrier (34-2).

15. Electronic weighing cell, comprising
- an apparatus base,
- an electronic weighing sensor arranged in the apparatus base,
- a load receiver (16) which is mechanically coupled with the weighing sensor and which carries a load pan mount and a switching weight receiver (20) and
- a weight switching device comprising a support unit (10) with switching weights (22-1 R, 22-1 L; 22-2R, 22-2L) and a lifting unit (42, 44, 46) for loading the switching weight receiver (20) with, and relieving the switching weight receiver (20) of load by, the switching weights (22-1 R, 22-1 L; 22-2R, 22-2L) as required,
**characterised in that**
the support unit (10) is constructed as a support unit (10), which is rigidly connected by way of the cross member (12) thereof with the apparatus base, according to any one of claims 11 to 14 and is arranged above the switching weight receiver (20) and
the lifting unit (42, 44, 46) is arranged for selective vertical movement of the switching weight carriers (34-1; 34-2).

16. Electronic weighing cell according to claim 15 when dependent on one of claims 9 and 10, **characterised in that** the lifting unit (42, 44, 46) comprises a motor-driven camshaft (44), on the cam disc (42) of which the support projections (38-1; 38-2) of the switching weight carrier (34-1; 34-2) are supported.

17. Electronic weighting cell according to one of claims 15 and 16, **characterised in that** the switching weight receiver (20) and the mounting of the switching weights (22-1 R, 22-1L; 22-2L, 22-2R) are so matched in height to one another that the switching weights (22-2R, 22-2L) of one switching weight carrier (34-2) in the case of uniform lowering thereof load the switching weight receiver (20) offset in time and the switching weights (22-1 R, 22-1 L) of the other switching weight carrier (34-1) in the case of uniform lowering thereof load the switching weight receiver (20) at the same time.

18. Electronic weighting cell according to claim 17, **characterised in that** it further comprises a control which is operatively connected with the lifting unit (42, 44, 46) and which is arranged to use the switching weights (22-1 R, 22-1 L), which load the switching weight support (20) at the same time in the case of uniform lowering of the associated switching weight carrier (34-1), as substitution weights within the scope of a substitution weighing routine and to use the switching weights (22-2R, 22-2L), which load the switching weight support (20) offset in time in the case of uniform lowering of the associated switching weight carrier (34-2), as calibration or linearisation weights within the scope of a calibration and linearisation routine.

## Revendications

1. Unité de support pour un dispositif de commutation de poids d'une cellule de pesée électronique, comprenant un premier support de poids de commutation (34-1) déplaçable verticalement par rapport à une base pour un montage avec jeu vertical d'un premier agencement de poids de commutation (22-1 R, 22-1 L), qui présente deux bras de support (30-1 R, 30-1 L) distants l'un de l'autre, parallèles et reliés au moyen d'un élément de pontage (32-1),
**caractérisée en ce que** :
un second support de poids de commutation (34-2R, 34-2L) pour un montage avec jeu vertical d'un deuxième agencement de poids de commutation (22-2R, 22-2L) qui présente également deux bras de support (30-2R, 30-2L) distants l'un de l'autre, parallèles et reliés au moyen d'un élément de pontage (32-2), est également agencé de manière à pouvoir se déplacer verticalement par rapport à la base,
dans lequel les bras de support (30-1 R, 30-1 L) du premier support de poids de commutation (34-1) sont agencés entre les bras de support (30-2R, 30-2L) du second support de poids de commutation (34-2) et parallèlement à ceux-ci et
dans lequel chaque support de poids de commutation (34-1 R, 34-1 L) est articulé sur une traverse transversale commune (12) au moyen de deux bielles parallèles (23-1 R, 23-1 L ; 23-2R, 23-2L) agencées extérieurement aux deux paires de supports (30-1 R, 30-1L ; 30-2R, 30-2L) parallèlement à ceux-ci en enserrant celle-ci entre eux et reliées à leurs extrémités libres à celui-ci.

2. Unité de support selon la revendication 1,
**caractérisée en ce que** :
les bras de support (30-1 R, 30-1 L ; 30-2R, 30-2L) de chaque support de poids de commutation (34-1 ; 34-2) sont agencés à la même hauteur l'un de l'autre ainsi que des bras de support (30-1 R, 30-1 L ; 30-2R, 30-2L) de l'autre support de poids de commutation respectif (34-1, 34-2).

3. Unité de support selon l'une quelconque des revendications précédentes,
**caractérisée en ce que** :
les bielles parallèles (23-1 R, 23-1 L ; 23-2R, 23-2L) de chaque support de poids de commutation individuel (34-1 ; 34-2) sont agencées décalées en hauteur l'une de l'autre.

4. Unité de support selon la revendication 3,
**caractérisée en ce que** :
les bielles parallèles (23-1 R, 23-1 L ; 23-2R, 23-2L) agencées respectivement sur un côté des supports de poids de commutation (34-1 ; 34-2) sont agencées décalées en hauteur l'une de l'autre.

5. Unité de support selon la revendication 4,
**caractérisée en ce que** :
les bielles parallèles (23-1 R, 23-1 L ; 23-2R, 23-2L) agencées respectivement sur un côté des supports de poids de commutation (34-1 ; 34-2) sont agencées perpendiculairement l'un à l'autre.

6. Unité de support selon l'une quelconque des revendications 4 à 5,
**caractérisée en ce que** :
les bielles parallèles (23-1 R, 23-1 L ; 23-2R, 23-2L) du premier et du second support de poids de commutation (34-1 ; 34-2) sont agencées par paire à la même hauteur.

7. Unité de support selon l'une quelconque des revendications précédentes,
**caractérisée en ce que** :
la traverse transversale (12), le premier et le second support de poids de commutation (34-1 ; 34-2) et les bielles parallèles respectivement correspondantes (23-1 R, 23-1 L ; 23-2R, 23-2L) sont conçus conjointement d'un seul tenant.

8. Unité de support selon la revendication 7,
**caractérisée en ce que** :
la traverse transversale (12), le premier et le second support de poids de commutation (34-1 ; 34-2) et les bielles parallèles respectivement correspondantes (23-1 R ; 23-1 L ; 23-2R, 23-2L) sont conçus conjointement en mode monolithique.

9. Unité de support selon l'une quelconque des revendications précédentes,
**caractérisée en ce que** :
chaque support de poids de commutation (34-1 ; 34-2) présente côté traverse transversale une saillie d'appui (38-1 ; 38-2).

10. Unité de support selon la revendication 9,
**caractérisée en ce que** :
les saillies d'appui (38-1 ; 38-2) font saillie au voisinage l'une de l'autre dans une cavité verticale ouverte (40) de la traverse transversale (12).

11. Unité de support selon l'une quelconque des revendications précédentes,
**caractérisée en ce que** :
un poids de commutation en forme de rouleau (22-1 R, 22-1 L ; 22-2R, 22-2L) est monté en suspension en dessous de chaque bras de support (30-1 R, 30-1 L ; 30-2R, 30-2L) parallèlement à celui-ci.

12. Unité de support selon la revendication 11,
**caractérisée en ce que** :
chaque poids de commutation (22-1 R, 22-1 L ; 22-2R, 22-2L) présente un corps de rouleau avec des tourillons axiaux (48) formés des deux côtés, qui se trouvent dans des rainures de guidage (52) alignées axialement et biseautées latéralement, qui sont moulées dans des tôles de recouvrement (50), avec lesquelles des chambres de palier, qui sont formées à leur extrémité et sur leurs côtés inférieurs ainsi que sur leurs côtés avant tournés l'une vers l'autre ouvertes dans le bras de support correspondant (30-1 R, 30-1 L ; 30-2R, 30-2L) et sont espacées l'une de l'autre de plus de la longueur du corps de rouleau ainsi que de moins de la longueur totale du poids de commutation (22-1 R, 22-1 L ; 22-2R, 22-2L), sont fermées vers le bas.

13. Unité de support selon l'une quelconque des revendications 11 à 12,
**caractérisée en ce que** :
les poids de commutation (22-1 R, 22-1 L ; 22-2R, 22-2L) de chaque support de poids de commutation individuel (34-1 ; 34-2) sont montés à la même hauteur l'un de l'autre.

14. Unité de support selon l'une quelconque des revendications 11 à 13,
**caractérisée en ce que** :
les poids de commutation (22-1 R, 22-1 L) du premier support de poids de commutation (34-1) sont montés décalés en hauteur par rapport aux poids de commutation (22-2R, 22-2L) du second support de poids de commutation (34-2).

15. Cellule de pesée électronique comprenant :
- une base d'appareil,
- un capteur de pesée électronique agencé sur la base de l'appareil,
- un récepteur de charge (16) mécaniquement couplé au capteur de pesée, qui porte une fixation de plateaux de charge ainsi qu'une réception de poids de commutation (20), et
- un dispositif de commutation de poids comprenant une unité de support (10) avec des poids de commutation (22-1 R, 221 L ; 22-2R, 22-2L) et une unité de levage (42, 44, 46) pour charger ou décharger en cas de besoin la réception de poids de commutation (20) avec les poids de commutation (22-1 R, 22-1 L ; 22-2R, 22-1 L),
**caractérisée en ce que** :
l'unité de support (10) est conçue sous la forme d'une unité de support (10) reliée de manière rigide à la base de l'appareil via sa traverse transversale (12) selon l'une quelconque des revendications 11 à 14 et agencée sur la réception de poids de commutation (20) et
l'unité de levage (42, 44, 46) est disposée pour un mouvement vertical sélectif des supports de poids de commutation (34-1 ; 34-2).

16. Cellule de pesée électronique selon la revendication 15, jusqu'à un certain point se référant à l'une quelconque des revendications 9 à 10,
**caractérisée en ce que** :
l'unité de levage (42, 44, 46) présente un arbre à cames (44) entraîné par une force motrice, sur le disque de coulissement (42) duquel s'appuient les saillies d'appui (38-1 ; 38-2) des supports de poids de commutation (34-1 ; 34-2).

17. Cellule de pesée électronique selon l'une quelconque des revendications 15 à 16,
**caractérisée en ce que** :
la réception de poids de commutation (20) et le montage des poids de commutation (22-1 R, 22-1 L ; 22-2R, 22-2L) sont ajustées mutuellement en hauteur de sorte que les poids de commutation (22-2R, 22-2L) du premier support de poids de commutation (34-2) chargent la réception de poids de commutation (20) avec un certain décalage dans le temps lors de leur abaissement uniforme et que les poids de commutation (22-1 R, 22-1 L) de l'autre support de poids de commutation (34-1) chargent de manière égale dans le temps la réception de poids de commutation (20) lors de leur abaissement uniforme.

18. Cellule de pesée électronique selon la revendication 17,
**caractérisée en ce que** :
elle comprend en outre une commande reliée activement avec l'unité de levage (42, 44, 46), qui est aménagée pour utiliser les poids de commutation (22-1 R, 22-1 L) chargeant de manière égale dans le temps la réception de poids de commutation (20) lors de l'abaissement uniforme du support de poids de commutation correspondant (34-1) dans le cadre d'un programme de pesée de substitution comme poids de substitution et
pour utiliser les poids de commutation (22-2R, 22-2L) chargeant de manière décalée dans le temps la réception de poids de commutation (20) lors de l'abaissement uniforme du support de poids de commutation correspondant (34-2) dans le cadre d'un programme d'étalonnage et/ou de linéarisation comme poids d'étalonnage ou de linéarisation.
